# EUROPEAN PATENT APPLICATION

(11) **EP 2 661 117 A1**
(43) Date of publication of application: **06.11.2013**
(21) Application number: 11852988.2
(22) Date of filing: 22.12.2011
(51) Int. Cl.: H04W 24/00, H04W 84/10

(54) **SMALL-SIZED BASE STATION, MONITORING DEVICE, AND INSTALLATION LOCATION MANAGEMENT METHOD FOR SMALL-SIZED BASE STATION**

(30) Priority: 28.12.2010 JP 2010292739
(71) Applicant: Panasonic Corporation, Osaka 571-8501 (JP)
(72) Inventor: KOIDE, Yasuo, Osaka 540-6207 (JP); NANRI, Masahiko, Osaka 540-6207 (JP); LI, Jifeng, Osaka 540-6207 (JP)
(74) Representative: Grünecker, Kinkeldey, Stockmair & Schwanhäusser
(86) International application number: PCT/JP2011/007220
(87) International publication number: WO 2012/090459

(57) **Abstract**

A small-sized base station for which the installation location can be restricted to an appropriate range and can be appropriately managed. A small-sized base station (100) is moveable. A utilities subscriber ID acquisition unit (102) acquires, from the outside, the subscriber ID of utilities in the installation location of the small-sized base station (100). A message generation unit (103) generates a request message containing the subscriber ID, inputted from the utilities subscriber ID acquisition unit (102), and identification information identifying the small-sized base station (100), then sends the generated request message to a monitoring device (200), and requests permission for the installation of the small-sized base station (100) in the installation location. A service management function unit (106) initiates service if the monitoring unit (200) has permitted installation, in response to the sent request message.

## Description

### Technical Field

The present invention relates to a small cell base station (hereinafter a small cell), a monitoring apparatus, and an installation location management method for small cells, and, more particularly, to a small cell, a monitoring apparatus, and an installation location management method for small cells that restrict installation locations of mobile small cells.

### Background Art

In recent years, consideration has been given to installing small cells (HeNBs) in homes, offices, shopping malls, and/or the like, as a dead zone countermeasure, or for high-speed communications. The term "small cells" as used above refers to femtocells, Home eNode Bs, and/or the like. Standardization efforts regarding small cells are being made by 3GPP.

Since such small cells are mobile and are installed by users, they could interfere with other communications. Accordingly, one practice in recent years has been to set restrictions regarding installation locations for small cells in order to prevent them from interfering with other communications (e.g., Non-Patent Literature 1). In addition, ways to coordinate a small cell with household facilities have been studied in recent years.

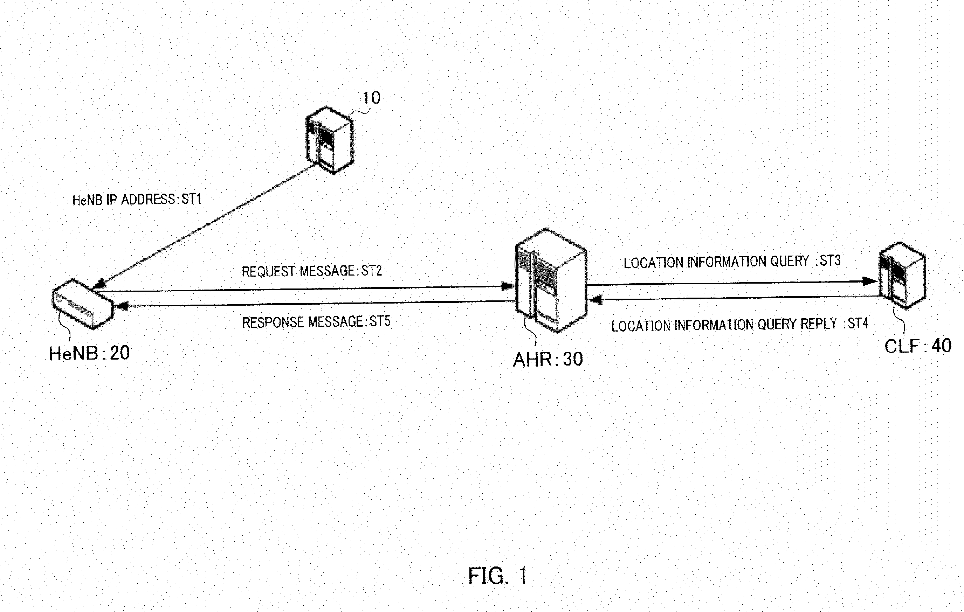

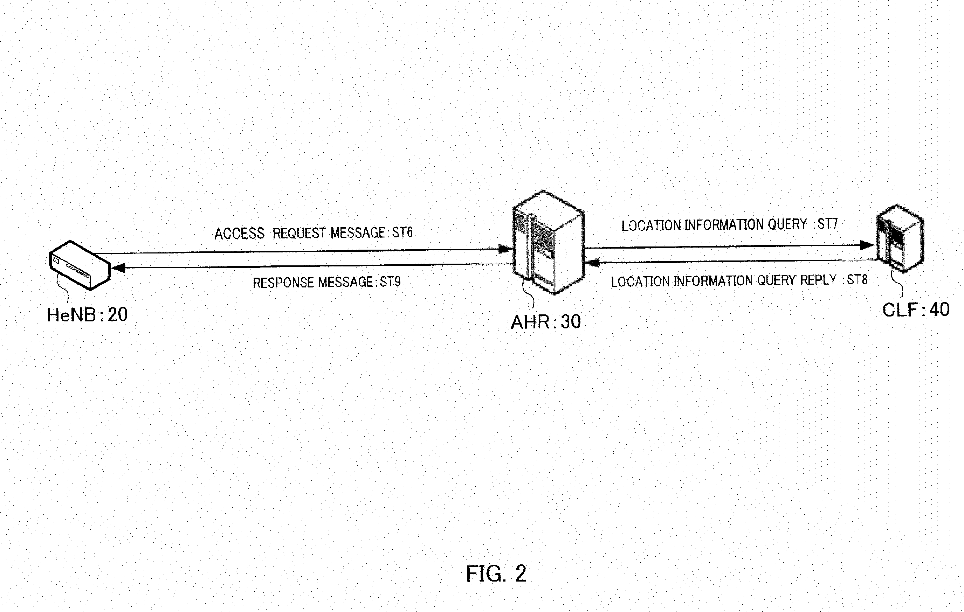

As a conventional method of restricting installation locations of small cells, there is a known method that uses IP addresses of broadband devices. A conventional method that uses IP addresses of broadband devices is described below using FIG. 1 and FIG. 2.

FIG. 1 is a diagram showing a conventional registration process where restrictions are placed on installation locations for small cells. FIG. 2 is a diagram showing a conventional authentication process where restrictions are placed on installation locations for small cells. In FIG. 1 and FIG. 2, as well as in the descriptions thereof, small cells are referred to as HeNBs.

First, a registration process is described using FIG. 1.

First, broadband device 10 assigns an IP address to HeNB 20 (step ST1).

Next, in order to request permission to provide service at its installation location, HeNB 20 sends to access point home register (AHR) 30 a request message including the assigned IP address (step ST2).

Next, AHR 30 sends to connectivity session location and repository function (CLF) 40 a request message (a location information query) including the IP address included in the received request message (step ST3).

Next, CLF 40 sends to AHR 30 a response message (a location information query reply) including an identifier (an access line location identifier: X) indicating location information corresponding to the IP address included in the received request message (step ST4).

Next, AHR 30 stores the identifier included in the received response message. In addition, AHR 30 sends to HeNB 20 a response message that allows installation at the installation location (step ST5).

The registration process is thus concluded.

Next, an authentication process is described using FIG. 2. An authentication process is performed after the above-described registration process.

First, HeNB 20, at its new location of installation, sends to AHR 30 an access request message including the IP address already assigned to itself (step ST6).

Next, AHR 30 sends to CLF 40 a request message (a location information query) including the IP address included in the access request message (step ST7).

CLF 40 sends to AHR 30 a response message (a location information query reply) including an identifier (an access line location identifier: X or Y) indicating location information corresponding to the IP address included in the received request message (step ST8).

Next, AHR 30 compares the identifier included in the received response message with the identifier stored during the registration process.

If the comparison reveals that the identifier included in the received response message is a match with the identifier stored during the registration process (i.e., X = X), AHR 30 sends a response message that allows installation (step ST9).

On the other hand, if the comparison reveals that the identifier included in the received response message is not a match with the identifier stored during the registration process (i.e., X ≠ Y), AHR 30 sends a response message that does not allow installation (step ST9).

For the method described above, it is assumed that the IP addresses are regional.

### Citation List

### Non-Patent Literature

NPL 1
   TR 33.820 v8.3.0 ch7.8

### Summary of Invention

### Technical Problem

However, with conventional methods, IP addresses must be assigned in such a manner as to ensure appropriate correspondence between the ranges indicated by the IP addresses and the installation locations of small cells. Thus, there is a problem in that service may be suspended when the ranges indicated by the IP addresses are inappropriate. By way of example, if small cells are to be installed in individual homes to improve dead zones for cell phones, it is preferable that installation locations be managed individually at each home. However, conventional methods that use IP addresses have a problem in that installation locations cannot be managed individually at each home. In addition, with conventional methods, there is a problem in that while it is possible to detect the movement of a small cell, its installation location cannot be restricted.

An object of the present invention is to provide a small cell, a monitoring apparatus, and an installation location management method for small cells that are capable of restricting installation locations of small cells within an appropriate range, and of appropriately managing installation locations of small cells.

### Solution to Problem

A small cell base station of the present invention includes a mobile small cell base station including: an acquisition section that acquires, from outside, subscriber identification information for a utility at an installation location; a request section that requests permission for installation at the installation location by sending, to a communicating party, the subscriber identification information acquired by the acquisition section and small cell identification information that identifies the small cell base station; and a service management function section that starts service if the permission for installation is granted by the communicating party in response to the request.

A monitoring apparatus of the present invention includes a monitoring apparatus that manages an installation location of a mobile small cell base station, the monitoring apparatus including: a reception section that receives, from the small cell base station, subscriber identification information for a utility at an installation location of the small cell base station, and small cell identification information for identifying the small cell base station; a storage section that prestores profile information mapping the subscriber identification information to the small cell identification information; a determination section that determines whether or not to grant permission to install the small cell base station at the installation location based on the profile information, and on the subscriber identification information and small cell identification information received by the reception section; and a notification section that notifies the small cell base station of a result of the determination.

A small cell installation location management method of the present invention includes a small cell installation location management method for a monitoring apparatus that manages an installation location of a mobile small cell base station, the small cell installation location management method including: receiving, from the small cell base station, subscriber identification information for a utility at an installation location of the small cell base station, and small cell identification information for identifying the small cell base station; prestoring profile information that maps the subscriber identification information to the small cell identification information; determining whether or not to grant permission to install the small cell base station at the installation location based on the profile information, and on the received subscriber identification information and small cell identification information; and notifying the small cell base station of a result of the determination.

### Advantageous Effects of Invention

With the present invention, installation locations of small cells can be restricted, and installation locations of small cells can be managed appropriately.

### Brief Description of Drawings

FIG. 1 is a diagram showing a conventional registration process where restrictions are placed on installation locations for small cells;
FIG. 2 is a diagram showing a conventional authentication process where restrictions are placed on installation locations for small cells;
FIG. 3 is a block diagram showing a configuration of a small cell according to an embodiment of the present invention;
FIG. 4 is a block diagram showing a configuration of a monitoring apparatus according to an embodiment of the present invention;
FIG. 5 is a block diagram showing a configuration of a utilities measuring device with respect to an embodiment of the present invention;
FIG. 6 is a diagram showing operations of a small cell, a monitoring apparatus, and a utilities measuring device with respect to an embodiment of the present invention; and
FIG. 7 is a diagram showing profile information with respect to an embodiment of the present invention.

### Description of Embodiments

Embodiments of the present invention are described in detail below with reference to the drawings.

### (Embodiment)

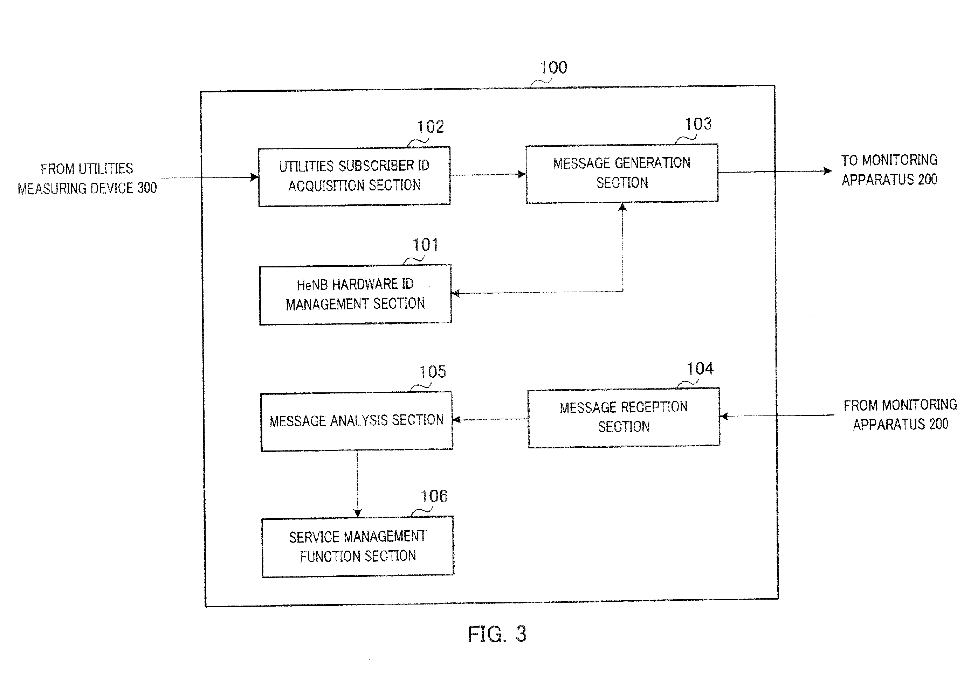

FIG. 3 is a block diagram showing a configuration of small cell 100 according to an embodiment of the present invention.

Small cell 100 generally includes HeNB hardware ID management section 101, utilities subscriber ID acquisition section 102, message generation section 103, message reception section 104, message analysis section 105, and service management function section 106.

HeNB hardware ID management section 101 stores identification information for identifying small cell 100. The identification information mentioned above may be a hardware ID of the small cell, for example.

Utilities subscriber ID acquisition section 102 receives a reception signal from utilities measuring device 300, which is described hereinbelow. Utilities subscriber ID acquisition section 102 acquires a utilities subscriber ID (subscriber identification information) by demodulating and decoding the reception signal. Utilities subscriber ID acquisition section 102 outputs the acquired subscriber ID to message generation section 103. The utilities subscriber ID is discussed hereinbelow.

Message generation section 103 acquires identification information from HeNB hardware ID management section. Message generation section 103 generates a request message including the subscriber ID and identification information received from utilities subscriber ID acquisition section 102. Message generation section 103 sends the generated request message to monitoring apparatus 200 (described hereinbelow).

Message reception section 104 receives from monitoring apparatus 200, and outputs to message analysis section 105, a response message to the request message sent from message generation section 103.

Message analysis section 105 analyzes the response message received from message reception section 104, and outputs an analysis result to service management function section 106.

Based on the analysis result received from message analysis section 105, service management function section 106 starts or suspends service by small cell 100. Specifically, if an analysis result granting permission for installation is obtained, service management function section 106 starts service by small cell 100. On the other hand, if an analysis result not granting permission for installation is obtained, service management function section 106 suspends service by small cell 100.

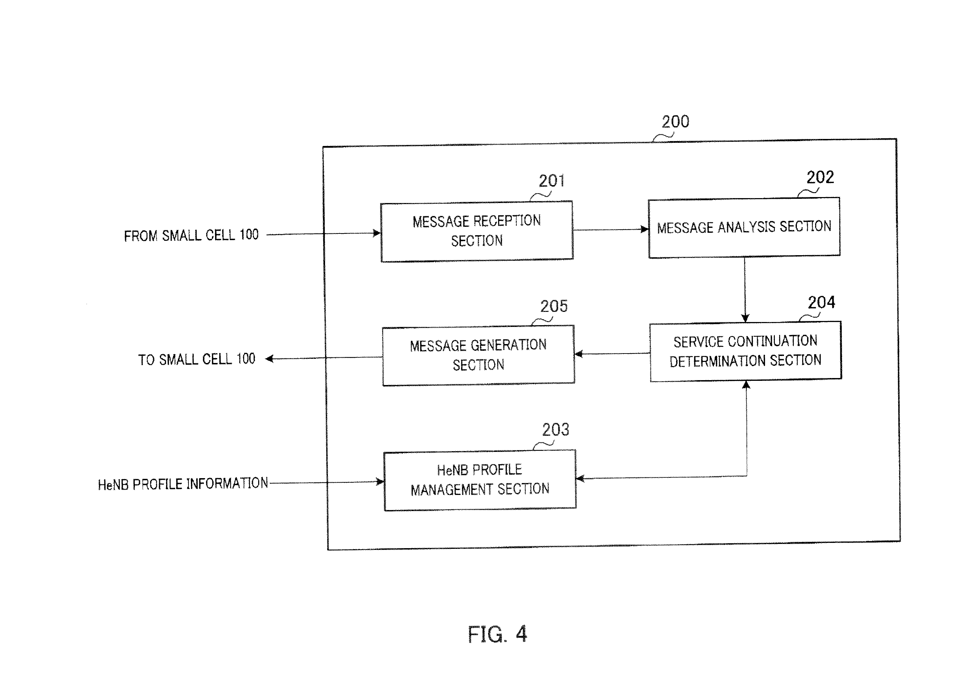

Next, a configuration of monitoring apparatus 200 is described using FIG. 4. FIG. 4 is a block diagram showing a configuration of monitoring apparatus 200. Monitoring apparatus 200 may be, for example, an operation and maintenance center (OMC).

Monitoring apparatus 200 generally includes message reception section 201, message analysis section 202, HeNB profile management section 203, service continuation determination section 204, and message generation section 205.

Message reception section 201 receives, and outputs to message analysis section 202, the request message that has been sent from small cell 100.

Message analysis section 202 analyzes the request message received from message reception section 201 to obtain the utilities subscriber ID and the identification information of small cell 100. Message analysis section 202 outputs the obtained subscriber ID and identification information to service continuation determination section 204.

HeNB profile management section 203 has profile information prestored, where the profile information maps utilities subscriber IDs to identification information of small cells 100. The profile information is inputted to monitoring apparatus 200 from outside by an operator, for example.

Based on the subscriber ID and identification information received from message analysis section 202 and the profile information stored in HeNB profile management section 203, service continuation determination section 204 determines whether or not to grant permission to install small cell 100. Specifically, service continuation determination section 204 makes a determination to grant permission for installation if there exists among the profile information the same combination (mapping) of subscriber ID and identification information as the combination (mapping) of subscriber ID and identification information received from message analysis section 202. On the other hand, service continuation determination section 204 makes a determination not to grant permission for installation if there does not exist among the profile information the same combination (mapping) of subscriber ID and identification information as the combination (mapping) of subscriber ID and identification information received from message analysis section 202. Service continuation determination mapped to 204 outputs the determination result to message generation section 205.

Message generation section 205 generates a response message including the determination result received from service continuation determination section 204. Specifically, if a determination result granting permission for installation is obtained, message generation section 205 generates a response message granting permission for installation. On the other hand, if a determination result not granting permission for installation is obtained, message generation section 205 generates a response message not granting permission for installation. Message generation section 205 sends the generated message to small cell 100.

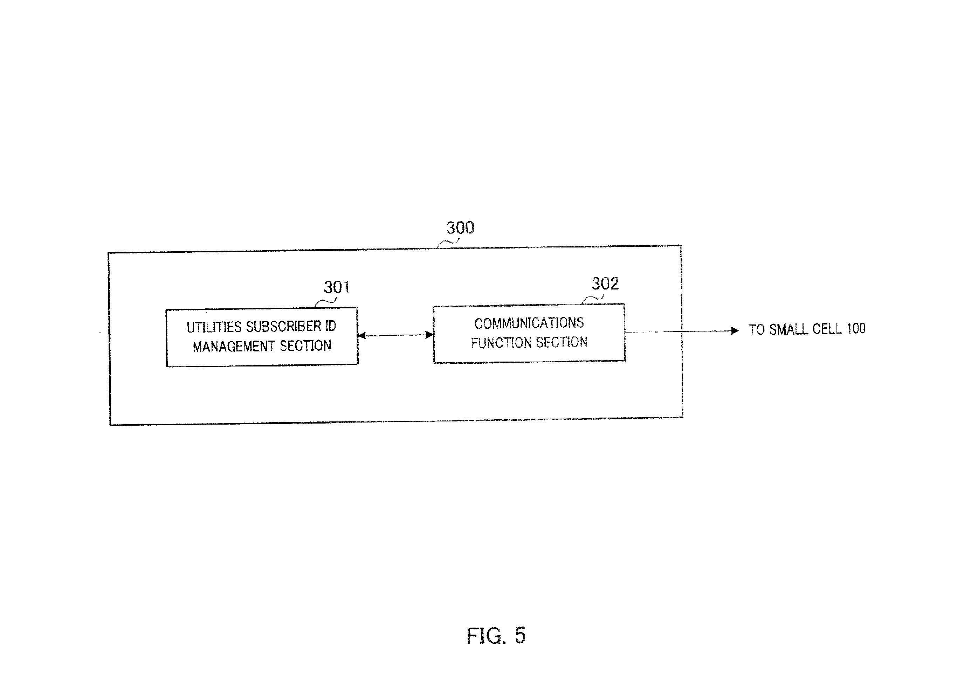

Next, a configuration of utilities measuring device 300 is described using FIG. 5. FIG. 5 is a block diagram showing a configuration of utilities measuring device 300. Utilities measuring device 300 is a measuring device (e.g., a meter) for utilities laid in an immobile building, such as a house, and/or the like.

Utilities measuring device 300 generally includes utilities subscriber ID management section 301, and communications function section 302.

Utilities subscriber ID management section 301 stores a subscriber ID for identifying the subscriber signed up for utilities such as electricity, gas, water, and/or the like.

Communications function section 302 reads out the subscriber ID from utilities subscriber ID management section 301, and generates a transmission signal by coding and modulating the subscriber ID that has been read out. Communications function section 302 wirelessly sends the generated transmission signal to small cell 100.

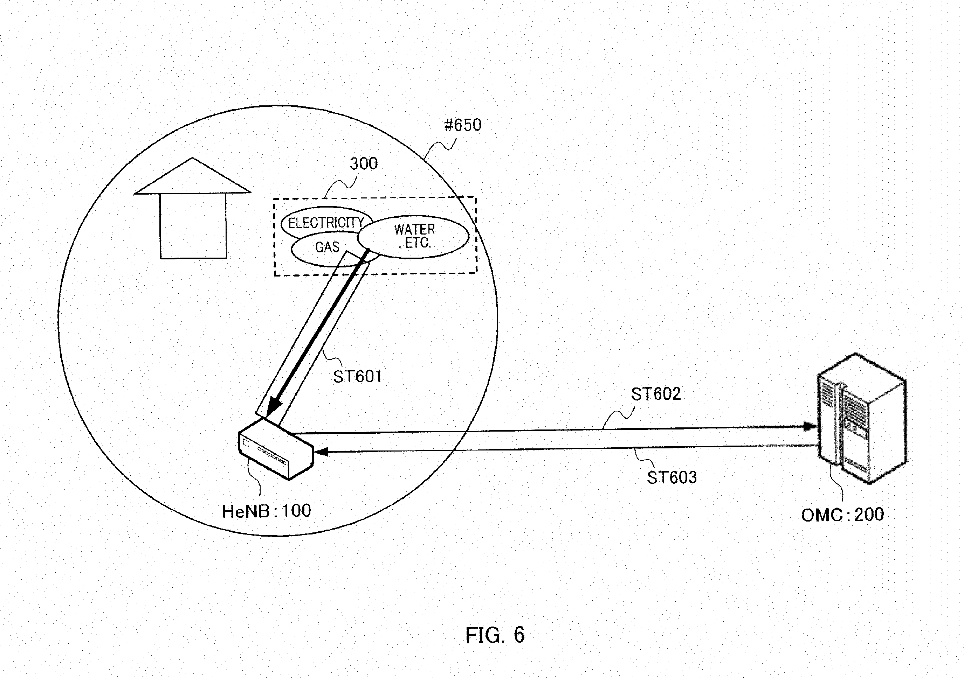

Next, operations of small cell 100, monitoring apparatus 200, and utilities measuring device 300 are described using FIG. 6. FIG. 6 is a diagram showing operations of small cell 100, monitoring apparatus 200, and utilities measuring device 300. With respect to FIG. 6 and descriptions thereof, small cell 100 is referred to as HeNB, and it is assumed that an OMC is used as monitoring apparatus 200.

According to FIG. 6, HeNB 100 is connected to utilities measuring device 300 through a wireless connection. HeNB 100 is connected to OMC 200 through a wired connection. Since the area where the utilities subscriber uses the utilities is the same as the area where installation of HeNB 100 is permitted, namely area #650, it is possible to appropriately manage the installation location of HeNB 100. The area where the utilities subscriber uses the utilities and the area where installation of HeNB 100 is permitted need not be completely identical, and need only partially overlap. In other words, so long as it is possible to manage within a desired range the area where installation of HeNB 100 is permitted, the present invention may be applied even if there is only a partial overlap as mentioned above.

First, HeNB 100 acquires the utilities subscriber ID from utilities measuring device 300 (step ST601). In so doing, it is preferable that, for the wireless connection established between HeNB 100 and utilities measuring device 300, a security tunnel be set up through the use of IPsec, and/or the like, thereby preventing any tampering midcourse.

HeNB 100 generates a request message including its own identification information and the acquired subscriber ID, and sends the generated request message to OMC 200 (step ST602).

Next, using the identification information and subscriber ID received from HeNB 100, OMC 200 references prestored profile information.

OMC 200 makes a determination to grant permission for installation if there exists among the profile information the same combination of subscriber ID and identification information as the acquired combination (mapping) of subscriber ID and identification information. On the other hand, OMC 200 makes a determination not to grant permission for installation if there does not exist among the profile information the same combination of subscriber ID and identification information as the acquired combination of subscriber ID and identification information.

OMC 200 generates a response message including the determination result, and sends the generated response message to HeNB 100 (step ST603).

Next, HeNB 100 receives the response message, and, depending on the determination result included in the received response message, either starts or suspends service.

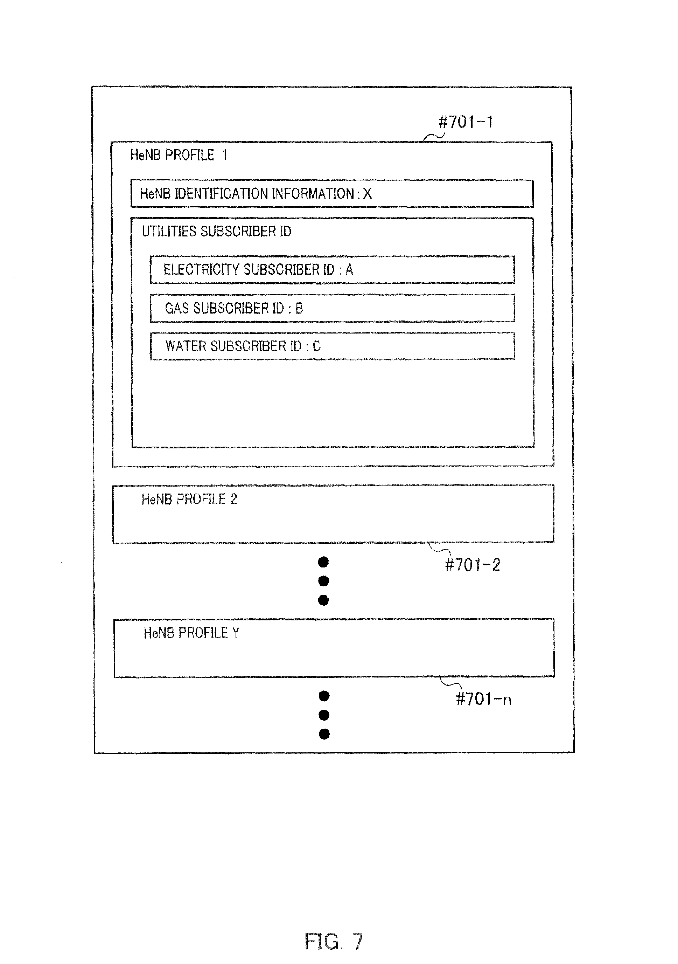

FIG. 7 is a diagram showing profile information.

According to FIG. 7, profile information #701-1 is information that maps, for each small cell 100, identification information X of small cell 100 to utilities subscriber IDs A through C for, for example, electricity, gas, and water, respectively. In the case of FIG. 7, one item of identification information is mapped to a plurality of subscriber IDs.

Since profile information #701-2, as well as those that follow, are generally comparable to profile information #701-1, they are not shown in the drawing, and descriptions thereof are omitted.

Thus, with the present embodiment, since the installation location of a small cell is managed using utilities subscriber IDs, it is possible to appropriately manage the installation location of the small cell.

With the present embodiment, since whether or not to grant permission for installation of a small cell is determined using profile information prestored on the monitoring apparatus, it is possible to restrict the installation location of the small cell.

Since the present embodiment uses utilities subscriber IDs, it is possible to manage the installation location of a small cell so long as there are utilities facilities, and without having to be dependent on a network system.

For the present embodiment, electricity, gas, and water have been cited as utilities. However, the present invention is by no means limited as such, and utilities other than electricity, gas, and water, may also be used as desired.

Although the present embodiment involves the use of three types of utilities subscriber IDs, namely electricity, gas, and water, the present invention is by no means limited as such, and may instead use any one, or two, subscriber ID(s) chosen from electricity, gas, and water. It may also use four or more types of utilities subscriber IDs.

Although the present embodiment involves the use of subscriber IDs, the present invention is by no means limited as such, and may instead use any given information besides subscriber ID so long as it enables identification of the subscriber that is signed up for a utilities.

With respect to the present embodiment, small cells start service when installation is permitted. However, the present invention is by no means limited as such, and may be so arranged as to continue providing service, which it had been providing up to that point, if installation is permitted.

The disclosure of the specification, drawings, and abstract included in Japanese Patent Application No. 2010-292739, filed on December 28, 2010, is incorporated herein by reference in its entirety.

### Industrial Applicability

A small cell, a monitoring apparatus, and an installation location management method for small cells according to the present invention are suitable for restricting installation locations of mobile small cells, in particular.

### Reference Signs List

- 100: Small cell
- 101: HeNB hardware ID management section
- 102: Utilities subscriber ID acquisition section
- 103: Message generation section
- 104: Message reception section
- 105: Message analysis section
- 106: Service management function section

## Claims

1. A mobile small cell base station comprising:
an acquisition section that acquires, from outside, subscriber identification information for a utility at an installation location;
a request section that requests permission for installation at the installation location by sending, to a communicating party, the subscriber identification information acquired by the acquisition section and small cell identification information that identifies the small cell base station; and
a service management function section that starts service if the permission for installation is granted by the communicating party in response to the request.

2. A monitoring apparatus that manages an installation location of a mobile small cell base station, the monitoring apparatus comprising:
a reception section that receives, from the small cell base station, subscriber identification information for a utility at an installation location of the small cell base station, and small cell identification information for identifying the small cell base station;
a storage section that prestores profile information mapping the subscriber identification information to the small cell identification information;
a determination section that determines whether or not to grant permission to install the small cell base station at the installation location based on the profile information, and on the subscriber identification information and small cell identification information received by the reception section; and
a notification section that notifies the small cell base station of a result of the determination.

3. The monitoring apparatus according to claim 2, wherein the determination section grants the permission for installation if the profile information includes the subscriber identification information and the small cell identification information of the same mapping as the mapping between the subscriber identification information and the small cell identification information received by the reception section.

4. A small cell installation location management method for a monitoring apparatus that manages an installation location of a mobile small cell base station, the small cell installation location management method comprising:
receiving, from the small cell base station, subscriber identification information for a utility at an installation location of the small cell base station, and small cell identification information for identifying the small cell base station;
prestoring profile information that maps the subscriber identification information to the small cell identification information;
determining whether or not to grant permission to install the small cell base station at the installation location based on the profile information, and on the received subscriber identification information and small cell identification information; and
notifying the small cell base station of a result of the determination.
